# EUROPEAN PATENT APPLICATION

(11) **EP 1 992 553 A2**
(43) Date of publication of application: **19.11.2008**
(21) Application number: 08153543.7
(22) Date of filing: 28.03.2008
(51) Int. Cl.: B62J 37/00, F02M 35/10

(54) **Compact frame for a motorcycle with air intake for integrated airbox**

(30) Priority: 23.04.2007 IT MI20070846
(71) Applicant: PIAGGIO & C. S.p.A., 56025 Pontedera (Pisa) (IT)
(72) Inventor: Raffaelli, Andrea, 51010 Massa e Cozzile (Pistoia) (IT)
(74) Representative: De Gregori, Antonella

(57) **Abstract**

The present invention refers to a frame for a motorcycle that comprises two beams (11,111,211) connected to a steering tube (20,120,220) at the front end (14,114,214) of the frame (10,110,210) and is characterised in that the steering tube (20,120,220) is located in a box-shaped body (18,118,218) having opposite openings (16a, 16b, 116a, 116b, 216a, 216b) and with its substantially longitudinal to the main extension of the frame, the beams (11,111,211) being fixedly connected to the box-shaped body (18,118,218). The frame for a motorcycle (10,110,210) according to the invention in this way integrates the air intake for the airbox whilst still being compact.

## Description

The present invention refers to a compact frame for a motorcycle with an air intake for the integrated airbox.

In a motorcycle, the airbox is a device applied to the power supply unit of the motor and more specifically upstream of the carburettor or the air filter.

Such a device has the function of increasing the pressure of the air going into the carburettor, creating a greater flow thereof with consequent supercharging of the motor.

Its operation, through conveyor ducts, exploits the speed of the motorcycle to convey a greater amount of air to the carburettor.

In this way, as the speed of the motorcycle increases, the pressure of the air in the duct of the carburettor increases.

The airbox, compared to previous technology that to obtain an improvement in performance exploited free intake, offers the advantage of preventing foreign objects from entering into the motor and limiting the intake noise.

However, designers tend to create increasingly large airboxes, with walls that are as far as possible from the intake mouths, in order to simulate an intake environment that is as close to open as possible.

In addition, the aforementioned use of pressurised airboxes required the positioning of the air intake in the front area of the motorcycle.

In such airboxes, the greater the pressure with which the air goes in, the greater the effect on the performance of the motorcycle.

The air intakes have therefore been positioned firstly on the sides of the front cowl and then moved towards the centre thereof where the maximum pressure is ensured.

The increased size of airboxes does, however, have a limit in the requirement to make frames of motorcycles increasingly compact.

A known type of compact frame that is widely used comprises die-cast beams in which the steering tube consists of an element still squashed permanently in a pack between the beams through screws arranged transversally with respect to the extension of the frame.

Moreover, the positioning of the air intakes in the front part of the motorcycles requires that special ducts be made, suitably arranged with respect to the frame, to take air to the airbox with negative consequences on the complexity, the costs and the production and assembly time of the motorcycles themselves.

The purpose of the present invention is to avoid the aforementioned drawbacks and in particular to make a compact frame for motorcycles that makes the use of special ducts for taking air to the airbox superfluous.

A further purpose of the present invention is to make a frame for motorcycles through which the costs and assembly times of the motorcycles can be reduced.

Another purpose of the present invention is to provide a compact frame for motorcycles provided with air intake for the airbox.

These and other purposes according to the present invention are accomplished by making a frame for motorcycles as outlined in claim 1.

Further characteristics of the device are the object of the dependent claims.

The characteristics and advantages of a frame for motorcycles according to the present invention shall become clearer from the following description, given as a non-limiting example, referring to the attached schematic drawings, in which:

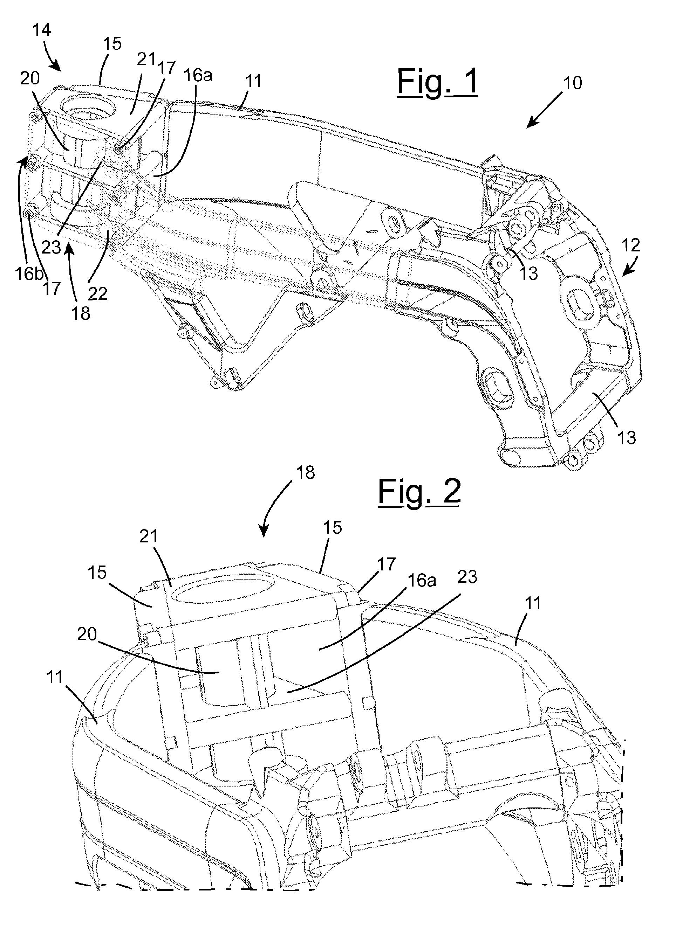

- figure 1 is a perspective view of a frame for motorcycles according to a first embodiment of the present invention;
- figure 2 is a partial perspective view of the front part of the frame for motorcycles according to the first embodiment of the present invention;
- figure 3 is a partial perspective view of the front part of the frame for motorcycles according to a second embodiment of the present invention;
- figure 4 is a partial perspective view of the frame of figure 3 according to a different angulation;
- figure 5 is a top side view of the box-shaped body containing the steering tube of the frame of figures 3 and 4;
- figure 6 is a partial perspective view of a variant of the second embodiment of the frame according to the invention;
- figure 7 is a section view according to the plane VII-VII of figure 6 of the box-shaped body mounted on the frame;
- figure 8 is a partial perspective view of the front part of the frame for motorcycles according to a further variant of the second embodiment of the present invention;

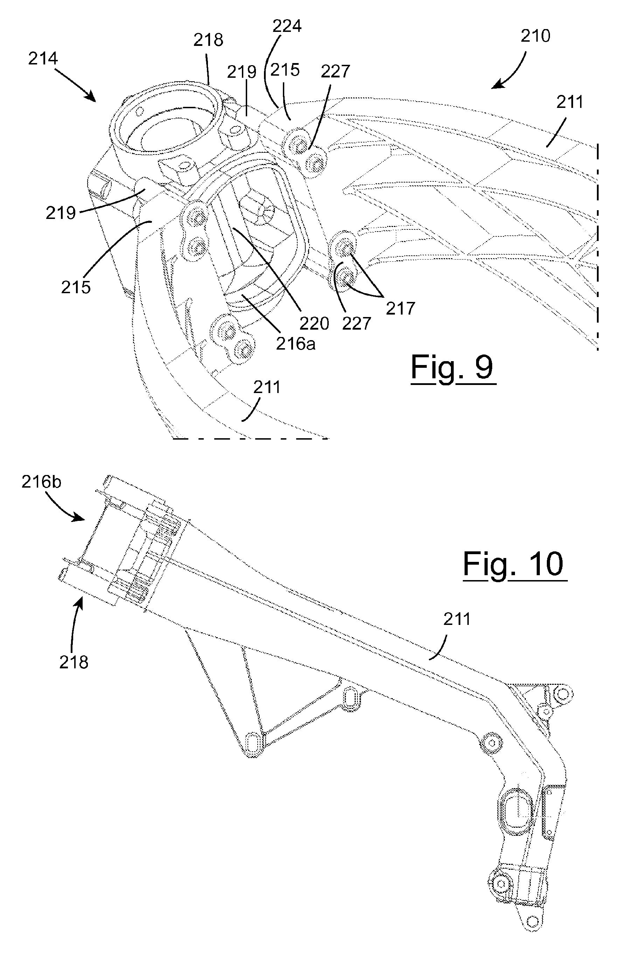

- figure 9 is a partial perspective view of the front part of the frame for motorcycles according to a third embodiment of the present invention;
- figure 10 is a top side view of the frame of figure 9;

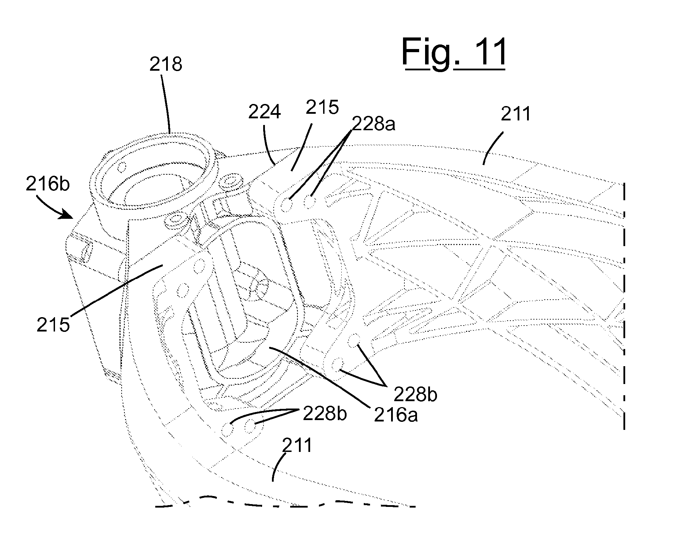

- figure 11 is a partial perspective view of a variant of the frame according to the third embodiment of the present invention.

With reference to the figures, a frame for motorcycles is shown, wholly indicated with 10,110,210.

The frame 10,110,210 according to the invention comprises two beams 11,111,211 alternatively made in a single piece (monolithic frame) or fixedly connected together at a first rear end 12 of the frame 10,110,210 (frame with two body side panels), for example through transversal rods 13.

At the front end 14,114,214 of the frame 10,110,210 the two beams 11,111,211 are also connected to a steering tube 20,120,220 for the passage of the tube of the fork (not depicted).

In a first embodiment, the end portions 15 of the beams 11 at the front end 14 are flat and kept spaced apart so as to define an open seat.

Such an open seat is suitable for housing the steering tube 20 that is locked between the two endings 15 through screws 17 arranged transversally to the main direction of extension of the frame 10.

The top and bottom mouths of the steering tube 20 respectively face a top plate 21 and a bottom plate 22 fixedly connected to the tube 20 itself.

The top and bottom plates 21 and 22 have a shape matching the section of the open seat made by the endings 15 of the beams 11.

In this way, when the steering tube 20 is locked between the two endings 15 of the beams 11, it is enclosed in a box-shaped body 18 having opposite openings 16a,16b and with its axis substantially longitudinal to the main extension of the frame.

The four faces of such a box-shaped body 18 consist of the top plate 21, the bottom plate 22 and the endings 15 of the beams 11.

Such a box-shaped body 18 surrounds the steering tube 20 and allows air to pass through the two opposite openings 16a,16b, in this way making the air intake for the airbox that is thus integrated in the frame 10.

In order to lock the top and bottom plates 21 and 22 to the end portions 15, such endings 15 and the plates 21,22 have a plurality of holes suitable for receiving the screws 17.

Preferably, the steering tube 20 is fixedly connected in addition to at least one intermediate plate 23 that surrounds it. Such an intermediate plate 23, as it can also be fixed by means of screws 17 to the endings 15, contributes to giving greater stability to the structure of the frame 10.

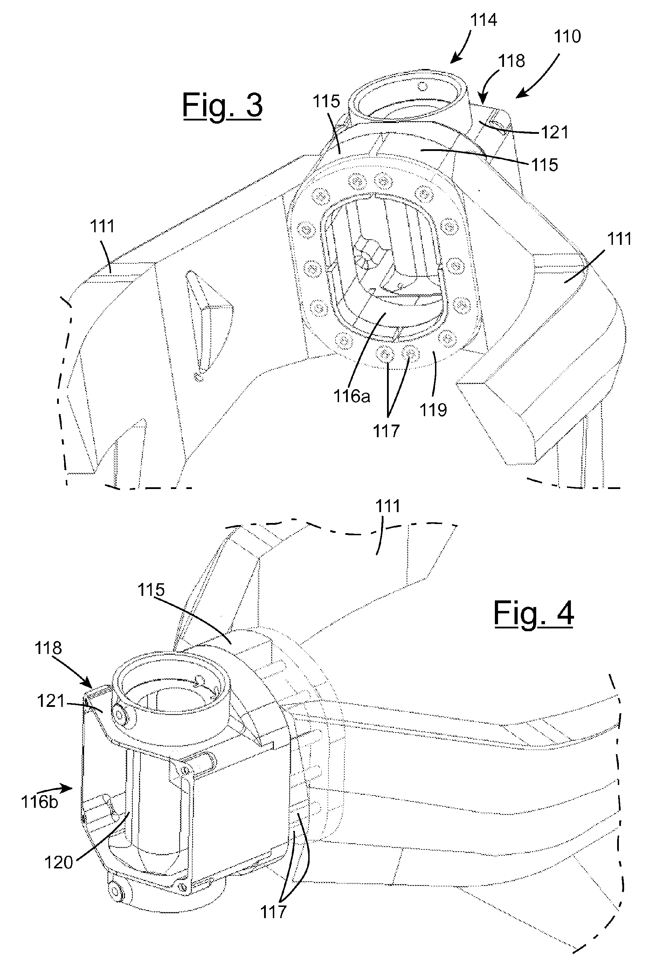

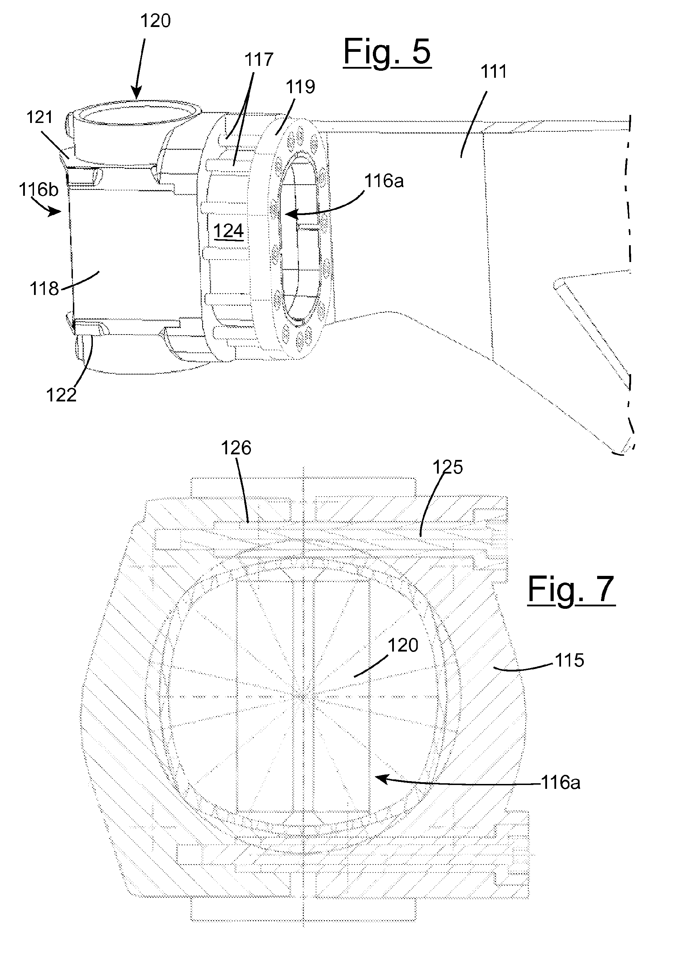

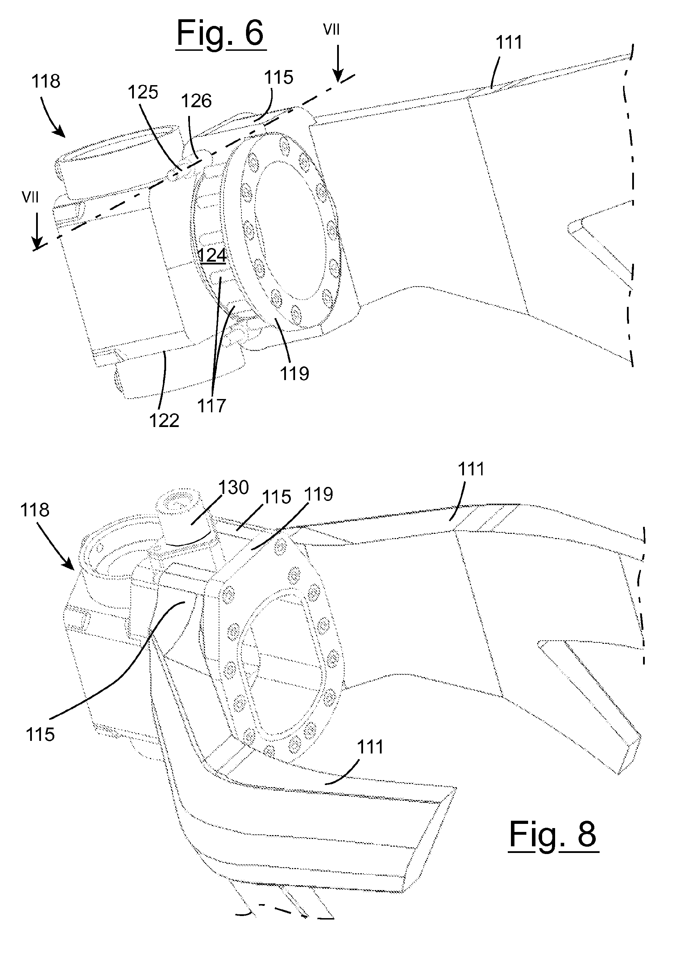

In a second embodiment some variants of which are shown in figures 3-8, the endings 115 of the beams 111 at the front end 114 are arc-shaped and in particular U-shaped (figures 3, 4 and 8) or C-shaped (figures 6 and 7) according to the embodiment, and are arranged close together so that the ends of the projections are substantially in contact, so as to define in the frame 110 a through annular opening having its axis substantially longitudinal to the main extension of the frame 110.

According to the configuration of the endings 115, the resulting annular opening can have a cylindrical, oval or substantially rectangular section, for example with bevelled corners.

The steering tube 120 is housed in a box-shaped body 118 having two opposite openings 116a,116b and with its axis substantially longitudinal to the main extension of the frame, and comes out into the top and bottom surfaces 121 and 122 thereof.

Such a box-shaped body 118 has a coupling portion 124 that is preferably narrow, having a section matching the section of the annular opening defined by the endings 115 of the beams 111.

The box-shaped body 118 can therefore be partially housed in said opening and squashed in a pack between such endings 115.

Preferably, as shown in figure 6, it is possible to foresee the use of second screws 125 suitable for squashing the two beams 111 of the frame 110 on the narrow portion 124 of the box-shaped body 118.

Such screws 125 can be from ergal or else steel and equipped with bushings 126 made from aluminium according to the diagram depicted in figure 6 that foresees using such bushings 126 as a spigot on the second ending 115 and in order to make the screw 125 mounted on a blind hole of such a second portion 115 airtight.

The box-shaped body 118 is locked at the endings 115 through a plurality of first screws 117 arranged longitudinally to the main direction of extension of the frame 110.

For this purpose, the box-shaped body 118, at one 116a of said opposite openings 116a,116b, has a projecting flange 119 suitable for cooperating with the side of the endings 115 on the inside with respect to the frame 110.

The flange 119 can be made in a single piece with the box-shaped body 118. Alternatively, the flange 119 can be mounted with slightly forced coupling on the box-shaped body 118 or else it can have the inner walls equipped with a draft angle so that, by means of the tightening of the screws 117, an elastic compression takes place on the end of the box-shaped body 118 that is suitably notched. In this way, the connection is tighter than it would be from a simple spigot.

The flange 119 is provided with through holes suitable for receiving the screws 117. On the side of the endings 115 on the inside with respect to the frame 110 corresponding holes are also foreseen.

In a preferred variant of the second embodiment, the box-shaped body 118 and the endings 115 are configured and mutually arranged so as to leave free a seat for housing an ignition switch 130 as shown in figure 8.

The variants shown in figures 3-8 lend themselves for the use of magnesium beams 111, steel screws 117 and aluminium box-shaped body 118 since the contact between steel and magnesium is airtight and thus safe from galvanic decay.

Alternatively, the frame 110 can be made from magnesium.

The screws 117 can be left in contact with the end portions 115 of the frame 110 in cases of coupling of steel material for the screws 117 and aluminium material for the frame 110, or aluminium material for the screws 117 and magnesium material for the frame 110, or else through the interposition of an aluminium flange 119 in the case of steel screws 117 and magnesium frame 110.

As an alternative to attachment by means of screws 117, a ring nut (not illustrated) can be used coupled with the coupling portion 124 of the box-shaped body 118. In this case, the annular opening formed by the endings 115, just like the coupling portion 124 of the box-shaped body 118, have a circular section.

In the case of separate beams 111, the centring and the radial positioning with respect to the axis of the opposite openings 116a,116b of the box-shaped body 118 is ensured through pins. Vice-versa, in the case of beams in a single piece (monolithic frame), the centring takes place directly in the narrow portion 124 of the box-shaped body 118 and the radial positioning must be achieved with a pin or an abutment plane.

In the preferred but not exclusive case of an aluminium box-shaped body 118 and magnesium beams 111, the ring nut may not be made from steel. The attachment therefore consists of a separate coupling portion 124, made from steel and having an external threading. The coupling portion 124 is partially screwed into the box-shaped body 118 and on the remaining part an aluminium ring nut is screwed that can be rested on magnesium. Box-shaped body 118 and ring nut are therefore screwed against one another on the steel coupling portion 124 safe against unscrewing.

In a third embodiment, the beams 211 do not clamp a portion of the box-shaped body 218 into a pack at their endings 215, but they are locked at their end surface 224 to at least one joining element 219 foreseen on such a box-shaped body 218.

In this way, the box-shaped body 218 can also be fixedly connected to a monolithic frame.

In a preferred embodiment, the endings 215 are arc-shaped.

Also in this embodiment, the box-shaped body 218, which contains the steering tube 220, has two opposite openings 216a,216b and with axis substantially longitudinal to the main extension of the frame. The steering tube 220 comes out into the top and bottom surfaces 221, 222 thereof.

Such a box-shaped body 218 is locked to the endings 215 through a small number of screws 217, arranged longitudinally to the main direction of extension of the frame 210.

For this purpose, the box-shaped body 218 is fixedly connected to the joining element 219 that cooperates with the side of the endings 215 that is outside with respect to the frame 210 and provided with a plurality of holes suitable for receiving the screws 217.

Preferably, washers 227 are foreseen at the holes.

The endings 215 are also provided with corresponding through holes 225.

In a preferred variant, each ending 215 comprises a pair of top holes 228a and a pair of bottom holes 228b suitably arranged and the joining element 219 comprises eight corresponding holes.

From the description that has been made the characteristics of the device object of the present invention are clear, just as the relative advantages are also clear.

Thanks to the use of a box-shaped body having opposite openings and with axis substantially longitudinal to the main extension of the frame, the steering tube is sunk in a channel for the passage of air.

Therefore, the beams are no longer directly fixedly connected to the steering tube but locked to the box-shaped body. In this way, whilst not giving up compactness and robustness of the frame, an air intake is formed directly integrated in it.

Finally, it is clear that the device thus conceived can undergo numerous modifications and variants, all of which are covered by the invention; moreover, all of the details can be replaced by technically equivalent elements. In practice, the materials used, as well as the sizes, can be whatever according to the technical requirements.

## Claims

1. Frame for a motorcycle (10,110,210) comprising two beams (11,111,211) connected to a steering tube (20,120,220) at the front end (14,114,214) of said frame (10,110,210) **characterised in that** said steering tube (20,120,220) is located in a box-shaped body (18,118,218) having opposite openings (16a,16b,116a,116b,216a,216b) and with its axis substantially longitudinal to the main extension of said frame (10,110,210), said beams (11,111,211) being fixedly connected to said box-shaped body (18,118,218).

2. Frame for a motorcycle (10) according to claim 1 **characterised in that** said box-shaped body (18) is formed from a top plate (21) fixedly connected at a top mouth of said steering tube (20), from a bottom plate (21) fixedly connected at a bottom mouth of said steering tube (20), and from the end portions (15) of said two beams (11).

3. Frame for a motorcycle (10) according to claim 2 **characterised in that** said top plate (21) and said bottom plate (22) are locked to said endings (15) through first screws (17).

4. Frame for a motorcycle (10) according to claim 2 or 3 **characterised in that** said steering tube (20) is fixedly connected to at least one intermediate plate (23), said intermediate plate (23) being locked to said endings (15).

5. Frame for a motorcycle (110,210) according to claim 1 **characterised in that** said box-shaped body (118,218) has at least one joining element (119,219) suitable for cooperating with the end portions (115,215) of said beams (111,211) for locking said box-shaped body (118,218) to said beams (111,211).

6. Frame for a motorcycle (210) according to claim 5 **characterised in that** said joining element (219) is locked to the end surface (224) of said beams (211).

7. Frame for a motorcycle (110) according to claim 5 **characterised in that** said endings (115) are arc-shaped and kept substantially in contact with each other, so as to define in the frame (110) an annular opening having its axis substantially longitudinal to the main extension of the frame (110) and suitable for surrounding a coupling portion (124) of said box-shaped body (118).

8. Frame for a motorcycle (110) according to claim 7 **characterised in that** said joining element (119) is a projecting flange foreseen in the box-shaped body (118), at a first opening (116a) of said opposite openings (116a,116b).

9. Frame for a motorcycle (110) according to claim 8 **characterised in that** said flange (119) is made in a single piece with said box-shaped body (118).

10. Frame for a motorcycle (110) according to claim 9 **characterised in that** said flange (119) is mounted with shape and/or force coupling on said box-shaped body (118).

11. Frame for a motorcycle (110) according to one of claims 8 to 10 **characterised in that** said flange (119) and said endings (115) are locked together through first screws (117).

12. Frame for a motorcycle (110) according to one of claims 8 to 10 **characterised in that** said flange (119) and said endings (115) are locked together through a ring nut.

13. Frame for a motorcycle (110) according to one of claims 7 to 12 **characterised in that** said endings (115) are locked on said coupling portion (124) of said box-shaped body (118) through second screws (125).

14. Frame for a motorcycle (110) according to one of claims 7 to 13 **characterised in that** said coupling portion (124) is separate from said box-shaped body (118) and has an external threading for screwing onto said box-shaped body (118).

15. Frame for a motorcycle (110) according to one of claims 7 to 14 **characterised in that** said box-shaped body (118) and said endings (115) are shaped and mutually arranged so as to form a seat for housing an ignition switch (130).

16. Frame for a motorcycle (10,110) according to any one of the previous claims **characterised in that** said beams (11,111) are made in a single piece.

17. Frame for a motorcycle (10,110) according to any one of claims 1 to 15 **characterised in that** said beams (11,111) are fixedly connected together at a rear end (12) of said frame (10,110).
